# EUROPEAN PATENT SPECIFICATION

(11) **EP 0 957 241 B1**
(45) Date of publication and mention of the grant of the patent: **10.11.2004**
(21) Application number: 99303728.2
(22) Date of filing: 13.05.1999
(51) Int. Cl.: F01N 3/02, F01N 3/28, B01D 39/20

(54) **Particulate trap for diesel engine**
Partikelfalle für einen Dieselmotor
Piège de particules pour un moteur diesel

(30) Priority: 14.05.1998 JP 13186298
(43) Date of publication of application: 17.11.1999
(73) Proprietor: Sumitomo Electric Industries, Ltd., Osaka (JP); TOYOTA JIDOSHA KABUSHIKI KAISHA, Aichi-ken 471-8571 (JP)
(72) Inventor: Shimoda, Kohei, 1-1, Koyakita 1-chome, Itami-shi, Hyogo (JP); Nagai, Youichi, 1-1, Koyakita 1-chome, Itami-shi, Hyogo (JP); Ihara, Tomohiko, 1-1, Koyakita 1-chome, Itami-shi, Hyogo (JP); Henda, Yoshimitsu, Toyota-shi, Aichi, 471-8571 (JP); Araki, Yasushi, Toyota-shi, Aichi, 471-8571 (JP); Watanabe, Yoshimasa, Toyota-shi, Aichi, 471-8571 (JP)
(74) Representative: Cross, Rupert Edward Blount

(56) References cited:
- EP-A- 0 798 452
- DE-A- 1 924 836
- DE-A- 4 141 580
- DE-A- 19 522 312
- DE-A- 19 611 150
- US-A- 4 126 560
- KOBERSTEIN E ET AL: "EINSATZ VON ABGASNACHBEHANDLUNGSEINRICHTUNGEN" VDI BERICHTE, DUESSELDORF, DE, vol. 559, 1995, pages 275-296, XP001050505 ISSN: 0083-5560

## Description

This invention relates to a particulate trap for collecting and removing particulate matter such as soot and the like emitted with the exhaust gas of a diesel engine for use in automobiles, industrial machinery and the like.

Although the diesel engine for use in automobiles, industrial machinery and the like is effective in view of energy efficiency, it is regarded as a problem in view of the air pollution caused by its exhaust gas. Removing NOx and particulate matter composed mainly of soot from the exhaust gas is an important subject for solving this problem.

Although, to remove these components from the exhaust gas, improvement of the engine has been made, for example, by employing exhaust gas recirculation (EGR) or modifying fuel injection system, there are other means, such as providing a filter and/or catalyst in an exhaust gas passage so as to purify the exhaust gas itself.

The feature of the means is to collect particulate matter composed mainly of soot in the exhaust gas by means of a filter and to remove them by after-treatment. The characteristics required for a particulate trap are, for example, as follows:
(1) High efficiency for collecting particulate matter, such as soot;
(2) Small pressure drop, i.e., no back-pressure is applied to the engine by providing the particulate trap in the exhaust gas system
(3) Regenerating performance by burning collected particulate matter on the spot; and
(4) Durability against high temperature and corrosive exhaust gas.

As a filter material for satisfying these requirements, cordierite ceramic transformed to a porous body thereby securing a honey comb structure has been utilized. However, because the thermal conductivity of this material is low, it is likely to suffer from the problem that a crack or fusion is caused depending on the temperature distribution thereof when the combustion heat is concentrated on a particular spot at the time of regeneration after the particulate matter has been collected. To solve this problem, the particulate trap using a metallic filter material has been proposed (Japanese Patent Application Laid-Open No. 6-257422, Japanese Patent Application Laid-Open No. 6-294313, Japanese Patent Application Laid-Open No. 7-731, and Japanese Patent Application Laid-Open No. 7-51522). With such a metallic trap it is possible to eliminate the above-mentioned problems involved in the removal of the particulate matter in the exhaust gas and the regeneration of the particulate trap, so that the metallic particulate trap has come to the stage of actual use.

As described above, the particulate trap is capable of collecting combustibles in the exhaust gas and removing them by burning in the regenerating process after collecting a predetermined amount thereof. In the exhaust gas, however, there exists a slight amount of noncombustible ash generated from engine oil additives and it cannot be removed by burning even if it is collected by the trap. As a result, the ash which is accumulated in the particulate trap during a long term use thereof causes clogging or the like therein, thereby increasing trap pressure drop which leads to the decrease of engine output, fuel penalty and the like.

As a countermeasure against this phenomenon, Japanese Patent Application Laid-Open No. 3-21008 discloses an example in which a fine filter loaded with a base metal catalyst and a coarse filter loaded with a noble metal catalyst are used in combination. However, the base metal catalyst supported by the fine filter is likely to absorb nitrogen oxide (NOx) and sulphur oxide (SOx) in the exhaust gas. Thus, the clogging is more likely to occur.

As described above, reducing the clogging of the particulate trap due to the non-combustible ash existing in a small quantity in the diesel exhaust gas is an important problem for realizing a practical particulate trap. Accordingly, an object of the present invention is to provide a particulate trap for solving the above described problem and provide a particulate trap having a high durability, i.e., high thermal resistance, corrosion resistance and the like.

DE-A-196 11 150 relates to a particle filter for a combination engine, such as a diesel engine.

US 4,126,560 relates to a filter medium for removing contaminants, including gels from molten polymers.

EP-A-0 798 452 relates to a particulate trap for a diesel engine.

DE-A-195 22 312 relates to a waste gas filter and device for handling of waste gas.

To achieve the above object, the present invention provides a particulate trap for a diesel engine, said trap comprising: a metallic main filter having an average pore diameter of from 10 µm to 80 µm and a metallic pre-filter having an average pore diameter of more than 80 µm but not more than 300 µm, wherein said main filter surface is arranged, in use, parallel to an exhaust gas flow and said pre-filter is shaped in a flat plate and arranged, in use, perpendicular to the gas flow.

In such two-stage filters, the first stage pre-filter removes the ash and the second stage main filter removes the remaining particulate matter. Therefore, the pore diameters of the filters become critical. The first stage pre-filter has a relatively large pore diameter to remove the ash having a relatively large diameter which may cause the clogging, and the second stage main filter removes only the particulate matter. Therefore, the pore diameter of the first stage filter is more than 80 µm to not more than 300 µm to remove most the ash. The pore diameter of the second stage main filter is not less than 10 µm to not more than 80 µm to remove the particulate matter. The minimum pore diameter of the pre-filter is determined according to an allowable pressure drop, and if the pore diameter is smaller than the value thus determined, a load on the diesel engine is increased by the back-pressure. The maximum limit of the pore diameter is determined depending on desired performance for collecting the particulate matter. If the pore diameter is larger than the limit, the ash and other particulate matter pass through the pre-filter, so that the role of the filter becomes meaningless, thereby the collecting efficiency being dropped.

The pre-filter is preferably made of a flat plate-shaped metal foam, which is positioned perpendicular to the direction of the exhaust gas flow, that is, transversely with respect to the exhaust gas pipe. The main filter is preferably composed of corrugate metal sheets and metallic unwoven fabric sheets wound together to a roll having a spiral cross-section, a sheet of the former being sandwiched between every two adjacent sheets of the latter, and the end portions of adjacent layers of the latter being sealed together alternately on the exhaust gas inlet side and the exhaust gas outlet side, so as to be positioned in such a manner as the spiral cross-section is transverse to the exhaust gas pipe.

As for the material of the filters, thermal resistance and corrosion resistance are required because they are exposed to the exhaust gas. Preferably the pre-filter is composed of 15 to 40 wt.% of Cr, 1 to 15 wt.% of Al and the balance being either Fe or Ni or both thereof with unavoidable impurities. Because it is difficult to form the material composed of such a composition into a desired shape, it is preferable to form the material into a desired final shape before making such a composition of the material by diffusion alloying method. Although the same condition is applicable to the main filter, preferably, the main filter is composed of 15 to 40 wt.% of Cr, 1 to 8 wt.% of Al and the balance being either Fe or Ni or both thereof with unavoidable impurities.

While the combination of these filters enables long term use, if the whole or part of the filters is loaded with a catalyst made of platinum family, a preferable effect is additionally achieved. That is, harmful components, such as CO and other odor substances, which cannot be otherwise collected by the filters, can be converted to such components as CO₂.

The following drawings are provided by way of example:
Fig. 1 is a perspective view of a cross section of an example of a particulate trap of the present invention.
Fig. 2 is a conceptual diagram for explaining a principle of selectively collecting the ash in the exhaust gas by a pre-filter.
Fig. 3 is an enlarged view of a section showing a preferred structure of the pre-filter for use in the present invention.
Fig. 4 is a graph showing changes of pressure drop of the exhaust gas in the case of the present invention and a comparative example, with a time passage.

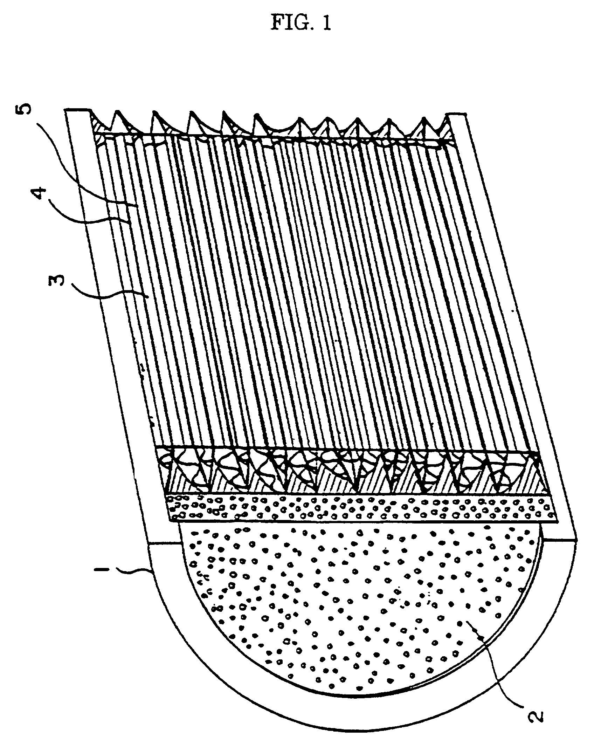

Fig. 1 is a perspective view of a cross section of an example of the present invention. The trap 1 is mounted in an exhaust system of a diesel engine to remove ash and other particulate matter from the exhaust gas. Particularly, a pre-filter 2 of a first stage is preferably disposed in a flat state perpendicular to the exhaust gas in viewpoints of the function and effect thereof. A main filter 3 of a second stage comprises metallic unwoven fabrics 4 and metallic corrugated sheets 5, which are wound together into a roll, two adjacent layers of the metallic unwoven fabrics being sealed together at their end portions alternately on either sides. As a result, a filter surface parallel to the exhaust gas flow is secured so that an increase in pressure drop due to reduced pore diameter is compensated by securing a larger filtering area. Thus, this is a preferable structure.

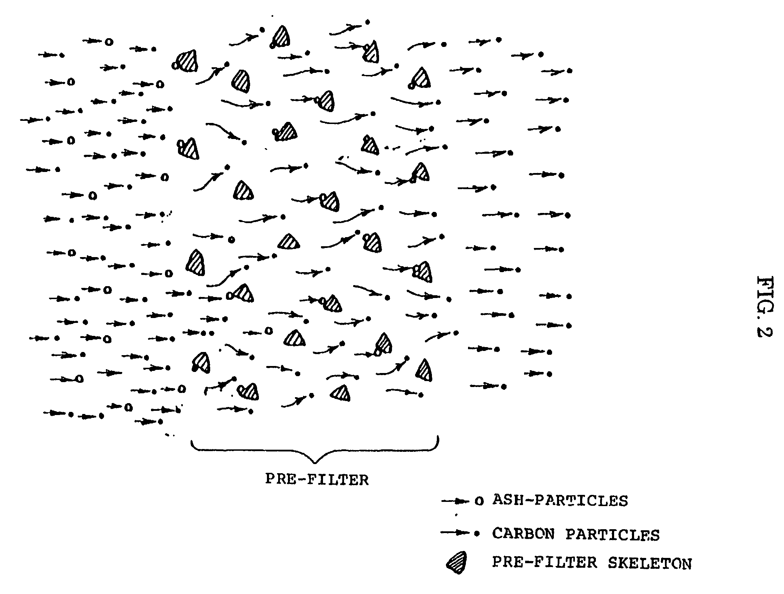

Fig. 2 is an explanatory diagram for explaining the process for collecting ash by means of the pre-filter of the present invention. This indicates a state in which the exhaust gas is fed through the pre-filter from the left side so that the ash is trapped. The size of the ash in the exhaust gas has a diameter of about several tens nm and the median value thereof are about 30 nm. Particulate matter composed mainly of soot is finer, namely of the order of about 10 nm.

The reason why ash can be selectively collected when the exhaust gas containing these passes through the pre-filter is that the ash is composed mainly of CaSO₄, its specific gravity is about 3 and its particle size is large. Since the particles are spongy and absorb the water content generated by combustion of fuel in the exhaust gas, they become sticky. On the other hand, as for the particulate matter composed mainly of soot, its particle size is small and its specific gravity is less than 2. Although they contain some amount of undecomposed substances of hydrocarbons, they are not so sticky. If the exhaust gas containing these particles strikes skeleton of the pre-filter, gas flow is bent by the skeleton. However, the particles of the ash collide with the skeleton because of their large inertial force and adhere to the skeleton because of their sticky characteristic. The particles of the particulate matter follow the gas flow because their inertial force is small, and even if they collide with the skeleton, it is repelled because they are not so sticky. As a result, the ash is selectively trapped by the skeleton of the filter. If the pores in the pre-filter skeleton are large, a possibility that the ash does not collide with the skeleton and passes through is increased. On the contrary, if the pores in the skeleton are small, undesirably, the ash is concentrated to the surface of the pre-filter. According to the embodiment of the present invention the pressure drop is mainly considered for evaluation and judging from these resets it holds true. The thickness of the filter can be set large when the pore diameter thereof is large, while it can be set small when the pore diameter thereof is small, depending on a probability that the ash strikes the skeleton as aforementioned. Preferably, it is about 0.5 to 3.0 mm.

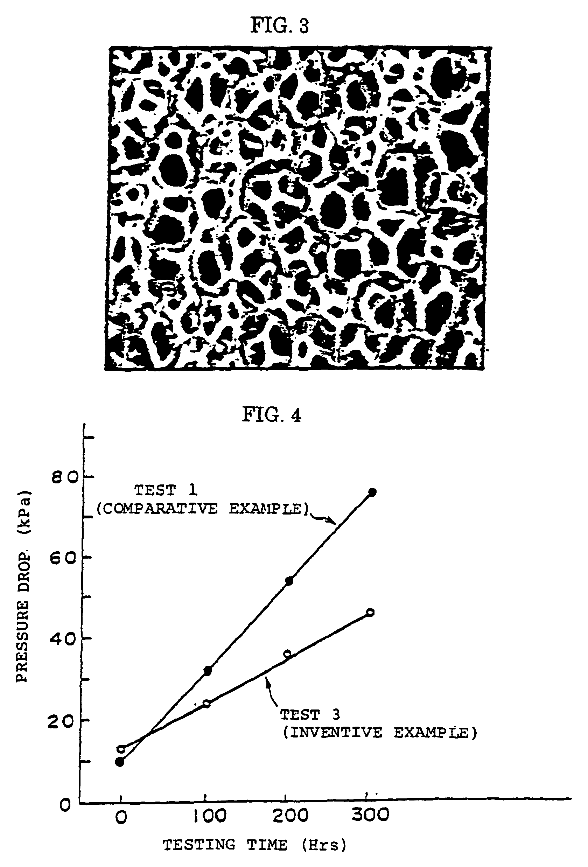

Fig. 3 is a schematic view of a structure showing a particularly preferred material configuration for the pre-filter and this material is called a metal foam. This structure is rigid and preferable because the junctions of the skeleton structure are firmly formed. More specifically, the metal foam called "CELLMET" ®, manufactured by Sumitomo Electric Ind., Ltd. has been well known.

Fig. 4 is a graph of data obtained by measuring pressure drop at the time of continuous high temperature durability tests conducted with respect to a filter unit which is provided with a pre-filter of the present invention and that which is not provided with a pre-filter. The specifications of the pre-filter and main filter and the testing method will be described in Example 1.

The feature of the two-stage filter structure of the present invention is that a collecting object of each filter is different. Namely, the first stage pre-filter aims to collect mainly the ash and the second stage main filter aims to collect the particulate matter composed mainly of soot.

The first stage pre-filter has a feature in its pore diameter. That is, the pore diameter of more than 80 µm to not more than 300 µm effectively collects the ash. If the pore diameter is 80 µm or less, it is too small, so that most of the ash is collected in the vicinity of the surface of the pre-filter and as a result of a long term use, the pre-filter is itself clogged. If the pore diameter exceeds 300 µm, the ash collides with the skeleton of the pre-filter so that the probability that it is not collected and passes through increases. Thus, the passing ash is collected by the main filter, so that the efficiency of the pre-filter is reduced. The structure of the pre-filter in this case is preferably flat so that the ash in the exhaust gas collides with the skeleton to be collected. Because this flat sheet has a plane perpendicular to a flow of the exhaust gas, the skeleton is required to be solid. Specifically, the metal foam is preferred.

Because the clogging of the main filter is reduced by the existence of the aforementioned pre-filter even if the pore diameter thereof is decreased, the pore diameter of the main filter can be not less than 10 µm to not more than 80 µm. It is better to select this pore diameter to collect the particulate matter composed mainly of soot in the exhaust gas whose ash has been removed by the pre-filter. If the pore diameter is less than 10 µm, the collected particulate matter are concentrated on the vicinity of the surface of the filter so that the clogging is accelerated. If the pore diameter exceeds 80 µm, fine particulate matter cannot be collected and they passes through the filter. As a result, the efficiency of the filter is reduced. Further, if the pore diameter of the filter is reduced, the back-pressure of the exhaust gas is increased. Therefore, it is recommendable to secure a larger filter area. Preferably, metallic unwoven fabric and metallic corrugated sheets are stacked on each other alternately and they are wound spirally, and the exhaust gas inlet side and outlet side are sealed alternately. In this structure, the exhaust gas flow and filter surface are placed in parallel to each other. Therefore, the exhaust gas does not strike the filter surface at a right angle but passes through the filter diagonally. Thus, the effective pore diameter of the filter is further reduced, so that the collecting accuracy is improved. For defining the pore diameters of the pre-filter and main filter, a diameter of an inscribed circle of each of at least 50 fine pores is measured by a scanning electron microscope (SEM) and an average value is expressed.

The pre-filter and main filter are preferably made of metal. The metallic structure has an advantage that a temperature of the exhaust gas is transmitted to fine sections easily so that it is not likely to be damaged by crack or crevice which may be caused by distortion due to thermal expansion. As a counter measure against an oxidizing gas contained in the exhaust gas and temperature of the exhaust gas, the metallic composition of the pre-filter is preferably composed of 15 to 40 wt.% of Cr, 1 to 15 wt.% of Al and the balance being either Fe or Ni or both of them with unavoidable impurities. Then, the main filter is preferably composed of 15 to 40 wt.% of Cr, 1 to 8 wt.% of Al and the balance being either Fe or Ni or both of them with unavoidable impurities. The optimum composition of the pre-filter and main filter should preferably be different each other because the matter to be collected by the respective filters are different. Both the compositions are determined from the viewpoint of thermal resistance and corrosion resistance, rather than processing characteristic. Since the pressure of a high Al content makes the material hard, it is preferable to form a stainless steel, Fe-Ni alloy, Fe or Ni metallic body into a filter shape and then incorporate Cr, Al into the shaped material by diffusion alloying method.

Because particles contained in the exhaust gas are selectively collected in such a structure, the filter of the present invention can be used for a long time. Further, by loading part or the whole of the surface of the pre-filter and main filter with a platinum-family catalyst, harmful gas components in the exhaust gas also can be reduced. The platinum family mentioned here refers to platinum, palladium, rhodium and iridium. Unlike the conventional methods to purify the gas,by loading the filter surface with a catalyst according to the present invention, the contact between the catalyst and the exhaust gas is improved, and the conversion efficiency is also improved. Although the entire filter surface may be loaded with the catalyst, from the viewpoint of practical efficiency, the pre-filter may be comprised of two sheets such that one on the exhaust gas inlet side is not loaded with the catalyst while the other on the exhaust gas emission side is loaded with the catalyst, or the main filter may be composed of two layers such that only the layer on the exhaust gas emission side is loaded with a catalyst, because if the ash is accumulated on the pre-filter on the exhaust gas inlet side or if the remaining particulate matter is accumulated on the main filter on the exhaust gas inlet side, the conversion efficiency is thereby decreased. Thus, an excellent catalyzing effect can be obtained, thereby improving economic performance.

The corrugated sheet for use as a separator in the main filter may be bored to secure a light weight or made of metal foam, such as one used for the pre-filter.

As described above, the particulate traps for a diesel engine according to the present invention are not clogged so much despite a long term use and not affected by a back-pressure to an engine, so that it is preferable for practical use.

### Example 1

Unwoven fabrics 0.5 mm thick composed of short fibers 15 µm in diameter made of stainless steel (SUS316: Cr 17 wt.%, Ni 14 wt.%, with Fe and impurities) and corrugated sheets which were 0.1 mm thick Fe-Cr alloy sheets subjected to corrugating processing at a pitch of 1 mm and at an amplitude of 0.7 mm, were alternately stacked over each other and wound spirally. In this example, the two sheets of the unwoven fabrics and two corrugated sheets were used to form a main filter. The end portions of either side of the unwoven fabrics were welded and sealed together alternately to form a spiral bag as viewed from either side thereof. After the processing is completed, the composition of the main filter was adjusted by diffusion alloying method (calorizing or chromizing) to consist of 25 wt.% of Cr, 5 wt.% of Al, 12 wt.% of Ni with the balance being Fe and impurities. The corrugated sheet was transformed by the diffusion alloying method to have a composition consisting of 20 wt.% of Cr, 5 wt.% of Al with the balance being Fe and impurities. This filter was used as the main filter A. As for sizes thereof, its length was 150 mm and its diameter was 80 mm. This was put into a stainless cylinder having an internal diameter of 82 mm and both ends of the filter were welded to the cylinder. The 5 mm length at one end of the stainless cylinder was reserved for a pre-filter to be installed therein. The average pore diameter of the filter was 10 µm.

In the same manner, samples having a different average pore diameter by changing the fiber diameter were produced. A sample produced using fiber diameter of 25 µm had an average pore diameter of 21 µm. This sample was used as main filter B. A filter produced by using fiber diameter of 50 µm had an average pore diameter of 60 µm. This filter was used as main filter C.

Next, 1.6 mm thick sheets of the "CELLMET" ® #7 made of Ni by Sumitomo Electric Ind., Ltd. were prepared and two sheets thereof were stacked over each other and then pressurized so as to have a thickness of 2 mm. Then, the composition was adjusted by the diffusion alloying method to consist of 21 wt.% of Cr, 5 wt.% of Al and the balance being Ni. The average pore diameter at this time was 100 µm. The sheets were cut to fit with the inner diameter of the aforementioned metallic cylinder to form a disk. Then, this disk was put into one end of the cylinder. Fig. 1 shows the cut-out view of a trap thus completed. This was mounted as a diesel particulate trap halfway of the exhaust gas system of a diesel engine vehicle with a turbocharger whose displacement was 2000 cc and then a continuous high temperature durability test was carried out under the condition that the rotation speed was 3400 rpm and the exhaust gas temperature was 700°C. The continuous high temperature durability test was continued for 300 hours and pressure drops before and after the test were measured. Table 1 shows the test results.

Using the aforementioned three types of main filters A, B and C, the same experiments were conducted by changing the pre-filter with the same arrangement specification. The pore diameter of each pre-filter sample was varied by changing the stacking number of the "CELLMET"® and pressurizing condition. Table 1 shows the results of the above mentioned experiments.

It is clear from the results of the above experiments that when the pore diameter of the pre-filter is within the range of this invention, the pressure drop does not give so large influence depending on the pore diameter of the pre-filter, even if the pore diameter of the main filter is small. However, when the pre-filter is not provided, clogging of the main filter increases the pressure drop and the service life of the particulate trap is shortened. The test results show that due to the effect of the pre-filter, the service life of the entire trap is significantly prolonged. Particularly, where the main filter has such a pore diameter as referred to in samples A, B and C, a pre-filter having a pore diameter of 80 to 200 µm is preferably used in combination with such a main filter.

**Table 1**

| data prior to test | pre-filter pore diameter (µm) | | | | | | | |
|---|---|---|---|---|---|---|---|---|
| main filter type | 50* | 80 | 100 | 200 | 500* | 1000* | 2000* | no pre-filter* |
| A (10µm) | 36* | 14 | 13 | 12 | 11* | 10* | 10* | 10* |
| B (21 µm) | 35* | 11 | 10 | 9 | 9* | 9* | 8* | 8* |
| C (60µm) | 33* | 9 | 8 | 8 | 8* | 7* | 7* | 7* |

| data after test | Pre-fifter pore diameter (µm) | | | | | | | |
|---|---|---|---|---|---|---|---|---|
| main filter type | 50* | 80 | 100 | 200 | 500* | 1000* | 2000* | no pre-filter* |
| A (10µm) | 158* | 52 | 46 | 34 | 82* | 80* | 77* | 76* |
| B (21µm) | 151* | 40 | 34 | 24 | 57* | 55* | 53* | 52* |
| C (60µm) | 132* | 30 | 24 | 20 | 51* | 50* | 48* | 48* |

| | | | | | | | | |
|---|---|---|---|---|---|---|---|---|
| * comparative data data unit: kPa | | | | | | | | |

A graph shown in Fig. 4 traces data of test 1 (using main filter A without the pre-filter) and test 3 (using main filter A in combination with the pre-filter having a pore diameter of 100 µm) in Example 1 with the passage of time. The pressure drop of test 1 was smaller than test 3 at the initial stage of the test because the pre-filter was not provided. However, the pressure drop of test 1 became larger than that of test 3 as the test was progressed. Namely, in the case of test 1, part of the particulate matter collected by the main filter could not be removed by burning and was accumulated to increase the pressure drop. On the contrary, in the case of test 3, the cause for the clogging to affect the pressure drop was removed by the use of the pre-filter having a relatively large pore diameter. Therefore, the increase of the pressure drop could be suppressed.

### Example 2

As the main filter, a filter having the same specification as filter B (pore diameter of 21 µm) used in Example 1 was used. Although the pre-filters were of the same specification as used in Example 1 having a pore diameter of 100 µm, their metallic compositions were varied by changing the diffusion alloying conditions so that the pre-filter had the compositions shown in Table 2.

Like Example 1, the continuous high temperature durability test was conducted using the exhaust gas from a diesel engine. Each pre-filter was observed every 100 hours and the test was continued for 300 hours. If there was no abnormal change in its external appearance, it was judged as "excellent". Table 2 shows the test results on the external changes.

According to the results, it is clear that an Ni-based compositional range comprising 15 to 40 wt.% of Cr and 1 to 15 wt.% of Al is preferable as the composition of the pre-filter.

**Table 2**

| composition of pre-filter (wt.%) | | | continuous high temperature durability test (Hrs) | | |
|---|---|---|---|---|---|
| Cr | Al | balance | 100 | 200 | 300 |
| 20 | 0* | Ni, unavoidable component | excellent | corrosion | corrosion |
| 21 | 10 | " | excellent | excellent | excellent |
| 22 | 18* | " | excellent | excellent | damage |
| 10* | 6 | " | corrosion | corrosion and damage | serious corrosion and damage |
| 30 | 5 | " | excellent | excellent | excellent |
| 44* | 4 | " | excellent | excellent | damage |

| | | | | | |
|---|---|---|---|---|---|
| * comparative data | | | | | |

### Example 3

The particulate trap for a diesel engine, in which the pre-filter having a pore diameter of 100 µm and the main filter B (21 µm in pore diameter), both used in Example 1, were combined, was prepared.

A catalyst was applied thereto. To prepare this catalyst, dinitrodiamine platinum nitrate containing platinum of 33g/liter was dissolved in deionized water to prepare an aqueous solution and then alumina powder of 1 kg having a specific surface area of 120 m²/g was charged into this solution and agitated sufficiently. The resultant mixture was dried for two hours at 150°C and further baked for two hours at 250°C so as to produce alumina powder on which platinum was dispersion-loaded. Further, the resultant alumina powder was subjected to wet grinding to obtain an alumina slurry.

The alumina slurry was applied to the aforementioned particulate trap and an excessive slurry was removed, and then it was dried for two hours at 150°C. Further, it was baked for an hour at 500°C so as to load the entire surface of the particulate trap with the catalyst. The loading amount was 30 g for alumina and 2g for platinum with respect to 1 liter of the particulate trap structure.

The particulate trap loaded with the catalyst was subjected to the same continuous high temperature durability test as Example 1 and pressure drops before and after this were measured. As a result, the value before the test was 12 kPa and the value after the test was 35 kPa, indicating that it was in an excellent range. By loading with the catalyst, the odor of the exhaust gas was removed. That is, the use of the catalyst is effective in removing the odor of the exhaust gas.

From the results of the examples, it can be understood that the use of the pre-filter gives a remarkable effect on the service life of the main filter so as to raise economic performance. Additionally, it was confirmed that the removal of the odor in the exhaust gas could be attained by loading with the catalyst.

As described above, with the pre-filter according to the present invention, a rise of back-pressure of the exhaust gas due to the clogging of the main filter is suppressed so that a long service life of the filter can be attained. As a result, a practically advantageous particulate filter can be provided. Further, by loading the surface of these filters with a catalyst, there is produced an effect of reducing the odor in the exhaust gas.

## Claims

1. A particulate trap for a diesel engine, said trap comprising: a metallic main filter having an average pore diameter of from 10 µm to 80 µm and a metallic pre-filter having an average pore diameter of more than 80 µm but not more than 300 µm, wherein said main filter surface is arranged, in use, parallel to an exhaust gas flow and said pre-filter is shaped in a flat plate and arranged, in use, perpendicular to the gas flow.

2. A particulate trap as claimed in claim 1, wherein said pre-filter is made of a metal foam.

3. A particulate trap as claimed in claim 1 or claim 2, wherein said main filter is so structured spirally and constituted of metallic unwoven fabrics having a metallic corrugated sheet between layers of said metallic unwoven fabrics while said metallic unwoven fabrics are sealed together at an exhaust gas inlet portion and an exhaust gas outlet portion alternately.

4. A particulate trap as claimed in any one of claims 1 to 3, wherein said pre-filter is composed of from 15 to 40 wt.% of Cr, from 1 to 15 wt.% of Al and the balance being either Fe or Ni or both thereof, together with unavoidable impurities.

5. A particulate trap as claimed in any one of claims 1 to 4, wherein said main filter is composed of from 15 to 40 wt.% of Cr, from 1 to 8 wt.% of Al and the balance being either Fe or Ni or both thereof, together with unavoidable impurities.

6. A particulate trap as claimed in any one of claims 1 to 5, wherein part or all of the main filter and/or pre-filter is/are loaded with a catalyst material comprising or consisting of a platinum group metal.

7. An exhaust gas system for a diesel engine comprising a particulate trap as claimed in any one of claims 1 to 6.

## Patentansprüche

1. Partikelabscheider für einen Dieselmotor, wobei der Abscheider umfasst: einen Metall-Hauptfilter mit einem durchschnittlichen Porendurchmesser von 10 µm bis 80 µm und einem Metall-Vorfilter mit einem durchschnittlichen Porendurchmesser von mehr als 80 µm, aber nicht mehr als 300 µm, wobei die Oberfläche des Hauptfilters während des Gebrauchs parallel zu einem Abgasstrom angeordnet ist und der Vorfilter in einer flachen Platte ausgeformt ist und während des Gebrauchs senkrecht zum Gasstrom angeordnet ist.

2. Partikelabscheider gemäß Anspruch 1, wobei der Vorfilter aus einem Metallschwamm besteht.

3. Partikelabscheider gemäß Anspruch 1 oder Anspruch 2, wobei der Hauptfilter spiralförmig aufgebaut ist und aus ungewebten Metallgazen besteht, wobei sich ein Wellblech zwischen den Schichten der ungewebten Metallgaze befindet, während die ungewebten Metallgaze alternierend entweder einen Abgas-Einlassabschnitt oder einen Abgas-Auslassabschnitt verschließen.

4. Partikelabscheider gemäß einem der Ansprüche 1 bis 3, wobei der Vorfilter aus 15 bis 40 Gew.-% Cr, 1 bis 15 Gew.-% Al und dem Rest, bestehend aus entweder Fe oder Ni oder aus beidem und unvermeidbaren Verunreinigungen, zusammengesetzt ist.

5. Partikelabscheider gemäß einem der Ansprüche 1 bis 4, wobei der Hauptfilter aus 15 bis 40 Gew.-% Cr, aus 1 bis 8 Gew.-% Al und dem Rest, bestehend aus entweder Fe oder Ni oder aus beidem und unvermeidbaren Verunreinigungen, zusammengesetzt ist.

6. Partikelabscheider gemäß einem der Ansprüche 1 bis 5, wobei ein Teil oder der gesamte Hauptfilter und/oder Vorfilter mit einem Katalysatormaterial gefüllt ist/sind, welches ein Metall der Platingruppe umfasst bzw. aus diesem besteht.

7. Abgassystem für einen Dieselmotor mit einem Partikelabscheider gemäß einem der Ansprüche 1 bis 6.

## Revendications

1. Piège à particules pour moteur diesel, ledit piège comprenant: un filtre principal métallique ayant un diamètre de pore moyen de 10 µm à 80µm et un préfiltre métallique ayant un diamètre de pore moyen supérieur à 60 µm mais inférieur à 300 µm, dans lequel la surface dudit filtre principal est disposée, en utilisation, parallèlement à un écoulement de gaz d'échappement et ledit préfiltre est sous forme d'une plaque plane et disposé, en utilisation, perpendiculairement à l'écoulement de gaz.

2. Piège à particules selon la revendication 1, dans lequel ledit préfiltre est constitué d'une mousse métallique.

3. Piège à particules selon la revendication 1 ou la revendication 2, dans lequel ledit filtre principal est de structure hélicoïdale et constitué de tissus non tissés métalliques ayant une feuille ondulée métallique entre des couches desdits tissus non tissés métalliques tandis que lesdits tissus non tissés métalliques sont réunis en une partie d'admission de gaz d'échappement et en une partie de sortie de gaz d'échappement alternativement.

4. Piège à particules selon l'une quelconque des revendications 1 à 3, dans lequel ledit préfiltre est composé de 15 à 40% en poids de Cr, de 1 à 15% en poids de Al et le reste étant soit Fe, soit Ni, soit les deux, conjointement avec des impuretés inévitables.

5. Piège à particules selon l'une quelconque des revendications 1 à 4, dans lequel ledit filtre principal est constitué de 15 à 40% en poids de Cr, de 1 à 8% en poids de Al et le reste étant, soit Fe, soit Ni, soit les deux, conjointement avec des impuretés inévitables.

6. Piège à particules selon l'une quelconque des revendications 1 à 5, dans lequel une partie ou la totalité du filtre principal et/ou du préfiltre est/sont chargées avec un matériau catalyseur comprenant ou constitué d'un métal du groupe platine.

7. Système de gaz d'échappement pour moteur diesel comprenant un piège à particules selon l'une quelconque des revendications 1 à 6.
